# EUROPÄISCHE PATENTSCHRIFT

(11) **EP 0 461 074 B1**
(45) Veröffentlichungstag und Bekanntmachung des Hinweises auf die Patenterteilung: **29.11.1995**
(21) Anmeldenummer: 91810416.7
(22) Anmeldetag: 04.06.1991
(51) Int. Cl.: B65H 20/00, B65H 20/20, D06C 3/10

(54) **Einrichtung zum Vorschieben und Halten von bahnförmigem Material**
Device for advancing and holding of web material
Dispositif pour avancer et tenir un matériau en bande

(30) Priorität: 04.06.1990 CH 1869/90
(43) Veröffentlichungstag der Anmeldung: 11.12.1991
(73) Patentinhaber: ZÜND SYSTEMTECHNIK AG, CH-9450 Altstätten (CH)
(72) Erfinder: Zeller, Hans, CH-9445 Rebstein (CH)
(74) Vertreter: Gachnang, Hans Rudolf

(56) Entgegenhaltungen:
- EP-A- 0 187 120
- WO-A-88/04271
- US-A- 4 505 468
- US-A- 4 605 216

## Beschreibung

Die vorliegende Erfindung betrifft eine Einrichtung in einem Flachbettplotter zum Vorschieben und Halten von bahnförmigem Material gemäss Oberbegriff des Patentanspruches 1.

Für die Bearbeitung von bahnförmigem Material auf einem Flachbettplotter müssen Mittel vorgesehen sein, welche die Materialbahn von einer Vorratrolle in den Plotter einziehen. Bei Computerpapier werden beispielsweise seitlich Perforationen angebracht, in die entsprechende Nocken aufweisende Rollen eingreifen und auf diese Weise das Papier vorschieben. Bei Bahnen aus Kunststoffolie, Gewebe oder ähnlichem Material ist es aus praktischen und auch aus wirtschaftlichen Gründen der möglichst vollständigen Nutzung der gesamten Materialbahnbreite unmöglich, Perforationen in den Randbereichen anzubringen. Ein Transport mittels Gummiwalzen oder dergleichen bewirkt stets einen unvermeidbaren Schlupf, so dass keine hohe Vorschubgenauigkeit oder Reproduzierbarkeit möglich ist.

Es ist auch bekannt, Folien mittels Saugnäpfen zu erfassen und auf dem Bett eines Plotters vorzuschieben. Das Vorschieben mittels Saugnäpfen ist aber in vielen Fällen zu ungenau, da die aus elastischem Material hergestellten Saugmittel eine Reproduzierbarkeit nicht gewährleisten.

Es ist auch bekannt, mittels einem über die gesamte Breite des Plotters verlaufenden Saugbalken die Materialbahn zu erfassen und im Plotter vorzuschieben. Balkenförmige Saugvorrichtungen benötigen eine grosse Menge an teurer Saugluft, und es ist zudem nötig, jeweils während der Bearbeitung der Materialbahn die in Saugbalken aus dem Bereich der Plotterfläche herauszufahren.

Die Aufgabe der vorliegenden Erfindung ist es, eine Einrichtung zu schaffen, welche es ermöglicht, in einem Flachbettplotter Materialbahnen ohne Randperforation zu transportieren oder/und an Ort und Stelle während deren Bearbeitung zu halten.

Diese Aufgabe wird bei einer Einrichtung der genannten Gattung gemäss den Merkmalen des Patentanspruches 1 gelöst.

Mit den auf die Materialbahn absenkbaren Haltemitteln kann das band- oder bahnförmige Material beschädigungsfrei und breitenunabhängig erfasst, von der Lieferrolle abgezogen und zugleich, falls erwünscht, während der Bearbeitung festgehalten werden. Der in einem federnd gelagerten, hülsenförmigen Mantel angebrachte elastische Ring passt sich selbsttätig an die Oberfläche des zu transportierenden Materiales an und verhindert, dass beim nachfolgenden Einstechen der Nadeln in die Oberfläche der Materialbahn diese zu den Nadeln hingezogen und Wellungen in der Oberfläche erzeugt werden. Beim Abheben der Haltemittel verharrt der hülsenförmige Mantel etwas länger auf der Materialoberfläche und hält diese fest, bis die Nadeln aus ihr herausgezogen sind. Durch die Vertiefungen seitlich der Nadeln kann von diesen zur Seite gedrängtes Material ausweichen, ohne dass Kräfte auf die die Nadeln tragende Trägerplatte einwirken können. Die verschieb- und feststellbare Anordnung der Haltemittel auf der Unterseite des Vorschubbalkens ermöglicht eine optimale Positionierung im Bereich des Randes oder allenfalls einer anderen Stelle. Die Verschiebung der Haltemittel am Balken kann durch einfaches Lösen der Backen erfolgen. Nach dem Feststellen der Backen sind die Haltemittel wiederum völlig starr mit dem Balken verbunden. Mit dem als Antriebsmittel für die Absenkung der Haltemittel eingesetzten Elektromagneten lassen sich letztere sehr rasch und mit einer vorgebbaren Kraft auf die Materialbahn absenken. Durch die in den Haltemitteln eingesetzten Federn werden die Nadeln und der elastische Ring nach dem Aussetzen der Erregung für die Magnete sicher wieder von der Oberfläche der Materialbahn abheben.

Aus dem europäischen Recherchenbericht geht hervor, dass gemäss der US-A 4,505 468 eine Vorrichtung zum Festhalten von Papierbögen bekannt ist, bei welcher an einem gegen die Oberfläche der Papierbögen führbaren Halterung Nadeln angebracht sind, deren Spitzen in einem spitzen Winkel zur Oberfläche der Papierbögen angeordnet sind. Durch ein Vorschubmittel können die Nadeln in Richtung ihrer Spitzen, d.h. in einem spitzen Winkel zur Oberfläche der Papierbögen in letztere hineingeführt werden. Um ein Durchdringen der Papierbögen durch die Nadeln zu verhindern, ist zwischen den mit den Spitzen gegeneinander gerichteten Nadeln ein Abstützelement vorgesehen, das sich auf der Oberfläche der Papierbögen abstützt. Beim Eindringen der Nadelspitzen in die Oberfläche der Papierbögen werden diese durch die geneigte Anordnung der Nadelspitzen zur Seite geschoben. Bei der Bearbeitung von dünnen Folien oder dünnen Papieren führt dies zu einer Verletzung von deren Oberfläche und es bleiben sichtbare Spuren auf deren Oberfläche zurück.

Aus der im Recherchenbericht ebenfalls genannten US-A 4,605,216 ist eine weitere Materialaufnahmevorrichtung zum Anheben von insbesondere textilen Flächengebilden bekannt, bei der an einem auf das aufzunehmende Material absenkbarem Haltekopf zwei konzentrisch angeordnete Ringe befestigt sind, an deren mit dem aufzunehmenden Material in Kontakt gelangenden Stirnflächen Sägezähne angebracht sind. Die Sägezähne der beiden Ringe sind gegenläufig ausgebildet. Zum Erfassen des zuoberst liegenden Flächengebildes werden die beiden Ringe in unterschiedlicher Drehrichtung gegeneinander verdreht, so dass die gegeneinander gerichteten Zahnspitzen das aufzunehmende Gut durch Zusammenschieben von dessen Oberfläche erfassen können. Durch eine solche Vorrichtung wird die Oberfläche des aufzunehmenden Materials sehr stark auf Schub beansprucht.Zum Festhalten von dünnen Kunststoffolien und dünnen Papieren auf dem Bett eines Flachbettplotters ist diese bekannte Vorrichtung nicht geeignet.

Nachstehend werden Ausführungsformen der vorliegenden Erfindung anhand der beiliegenden Zeichnungen näher erläutert. Es zeigen:
- Fig. 1: einen vertikalen Schnitt durch die Einrichtung mit einer Vorrichtung zum Mitnehmen einer Materialbahn,
- Fig. 2: einen Grundriss der Einrichtung, Balken weggelassen,
- Fig. 3: einen vertikalen Schnitt durch den Schleifkontakt an der Mitnahmevorrichtung,
- Fig. 4: eine Draufsicht auf den Greifer,
- Fig. 5: einen vertikalen Schnitt durch den Greifer nach Fig. 4, längs Linie V-V,
- Fig. 6: einen vertikalen Schnitt durch den Greifer gemäss Fig. 7 längs Linie VI-VI und
- Fig. 7: einen Vertikalschnitt einer weiteren Ausführungsform gemäss Fig. 1.

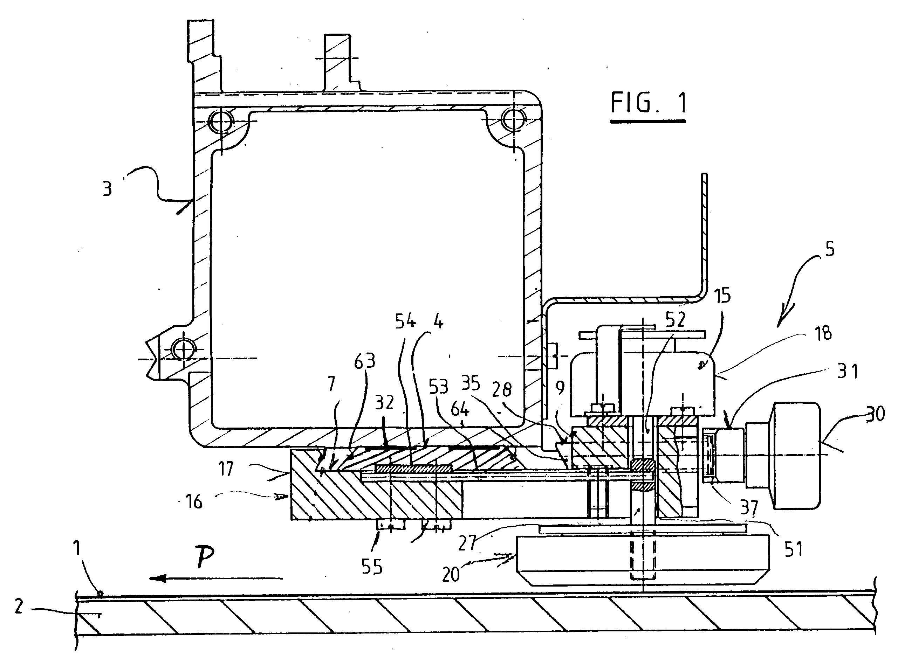

Die Einrichtung umfasst ein Bett 2, das zur Aufnahme des zu bearbeitenden Abschnittes der Materialbahn 1 ausgelegt ist. Die Längsrichtung des Bettes 2 liegt parallel zur Richtung des Pfeiles P (Fig. 1). Der jeweils bearbeitete Abschnitt des bahnförmigen Materials 1 ruht während der Bearbeitung auf der Oberseite des Bettes 2. Nachdem die Bearbeitung beendet worden ist, wird der bearbeitete Materialabschnitt aus dem Bett 2 in der Richtung des Pfeiles P herausgeführt. Eine Vorratsrolle (nicht dargestellt) mit dem noch unbearbeiteten Material 1 befindet sich rechts vom dargestellten Ausschnitt.

Die Einrichtung umfasst ferner einen seitlich des Bettes 2 abgestützten Balken 3, welcher sich oberhalb des Bettes 2 befindet und dessen Längsrichtung senkrecht zur Ebene des Zeichnungsblattes verläuft. Der Balken 3 ist in einer an sich bekannten Weise in der Verschieberichtung P der Materialbahn 1 und somit auch entlang dem Bett 2 hin und her bewegbar. An der Unterseite des Balkens 3 ist eine trapezförmige Schiene 4 befestigt. Die schmälere Fläche der Schiene 4 ist der Unterseite des Balkenkörpers 3 zugewandt und bildet einen Schwalbenschwanz. Der Balken 3 ist mit einem an sich bekannten Kopf (nicht dargestellt) ausgerüstet, welcher zur Aufnahme von Werkzeugen für die Bearbeitung des bahnförmigen Materials 1 dient. Der Kopf ist entlang dem Balken 3 bewegbar, und er kann mit der den Schwalbenschwanz bildenden Schiene 4 in Eingriff stehen. Der Kopf und der Balken 3 sind nach Massgabe eines Computer-Programmes bewegbar, welches die Bearbeitung des Bahnmaterials 1 steuert. Die Ausgestaltung des Bearbeitungskopfes und dessen Antrieb ist nicht dargestellt und nicht Gegenstand dieser Erfindung.

Am Balken ist mindestens eine Vorichtung 5 zum Mitnehmen der Materialbahn vorgesehen. Sie ist unten am Balken 3 angeordnet. Zweckmässig ist je eine solche Vorrichtung 5 in den Endbereichen des Balkens 3 befestigt, so dass sie auf die Randpartien der Materialbahn 1 einwirken können. Der Vorschub der Materialbahn 1 wird durch eine entsprechende Vorwärtsbewegung des Balkens 3 verursacht. Dazu wird zunächst die Mitnahmevorrichtung 5 in einer nachstehend näher beschriebenen Weise mit der Materialbahn 1 in Eingriff gebracht. Nachdem ein neuer Abschnitt des Bahnmaterials 1 auf dem Bett 2 zu liegen gekommen ist, kann die Koppelung zwischen den Mitnahmevorrichtungen 5 am Balken 3 und dem Bahnmaterial 1 aufgehoben werden. Die Bearbeitung des neuen Abschnittes der Warenbahn 1 kann beginnen.

Die Mitnahmevorrichtung 5 weist ein Gehäuse bzw. eine Grundplatte 16 auf (Fig. 1 bis 3) mit einem flachen Abschnitt 17 und einem erhöhten Abschnitt 18. Der flache Plattenabschnitt 17 befindet sich seitlich des Balkens 3. In der Oberseite des Flachabschnittes 17, welche dem Balken 3 zugewandt ist, ist eine schwalbenschwanzförmige Ausnehmung 7 eingelassen, die mit der Längsrichtung des Balkens 3 zusammenfällt. Die Ausnehmung 7 dient zur verschieb- und feststellbaren Koppelung der Mitnahmevorrichtung 5 am Balken 3. Diese Koppelung erfolgt an der Schwalbenschwanzschiene 4.

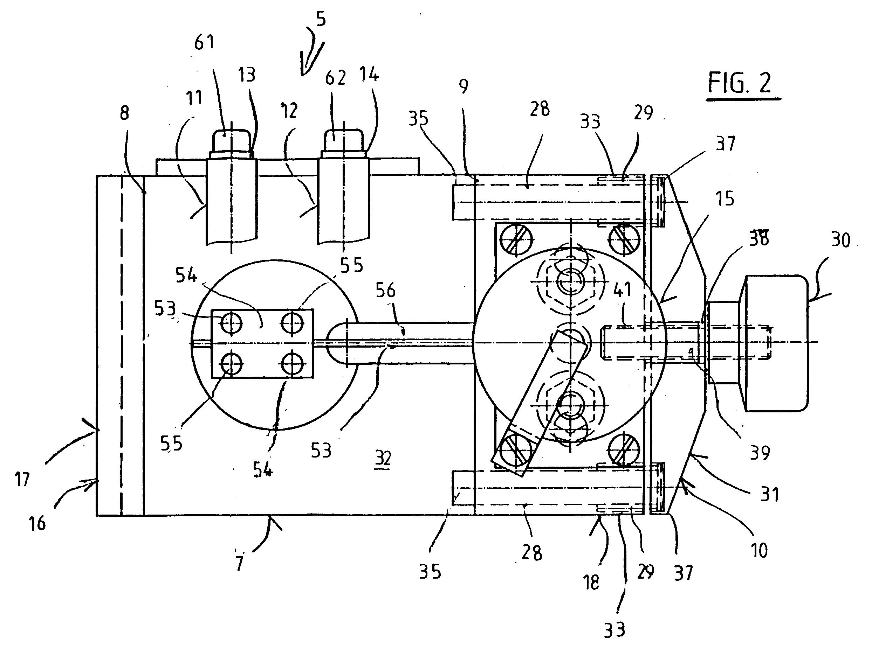

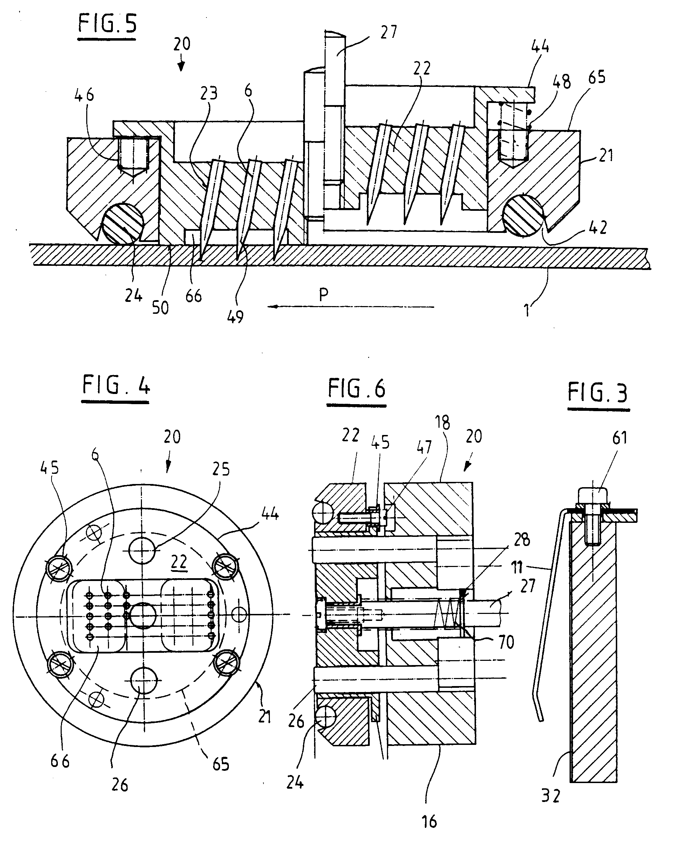

An der Unterseite des Balkens 3 sind isolierte Leiterbahnen angebracht. Schleifkontakte 11 und 12 (Fig. 2 und 3) in Form von flachen Federn sind an der Grundplatte 16 mit Hilfe von isolierten Schrauben 61 und 62 befestigt. Der freie Teil der Federkontakte 11 und 12 kann auf Leiterbahnen 32 am Balken 3 gleiten und ermöglicht die Übertragung elektrischer Signale vom Balken 3 zur Mitnahmevorrichtung 5. Die Schleifkontakte 11 und 12 sind mit Leitern 13 und 14 an ein Antriebsmittel 15 angeschlossen, welches noch näher beschrieben wird. Über die Leiterbahnen 32, Schleifkontakte 11 und 12 sowie über die Leiter 13 und 14 werden Steuersignale der Vorrichtung 5 zugeführt.

Eine der Seitenwände 35 der schwalbenschwanzförmigen Ausnehmung 7 wird durch die schrägen Stirnflächen 35 von Haltebacken 10 darstellenden Stösseln 28 gebildet, welche im Hochabschnitt 18 der Grundplatte 16 längsverschiebbar gelagert sind und in einem Abstand voneinander längsverschiebbar sind. Zweckmässigerweise ist je einer dieser Stössel 28 in jener Randpartie der Grundplatte 16 gelagert.

Die Backen 10 umfassen ferner einen Bügel bzw. ein Joch 31, dessen Enden mit den rückwärtigen Enden der Stössel 28 verbunden sind. Die die Stössel 28 aufnehmenden Bohrungen 37 in der Grundplatte 16 weisen einen erweiterten Bereich 33 auf, welcher sich dem in jenem Abschnitt der Bohrung befindet, der dem Joch 31 zugewandt ist. In diesem Bohrungsbereich 33 ist je eine Druckfeder 29 angeordnet, welche gegen die entsprechende Endpartie des Joches 31 drückt.

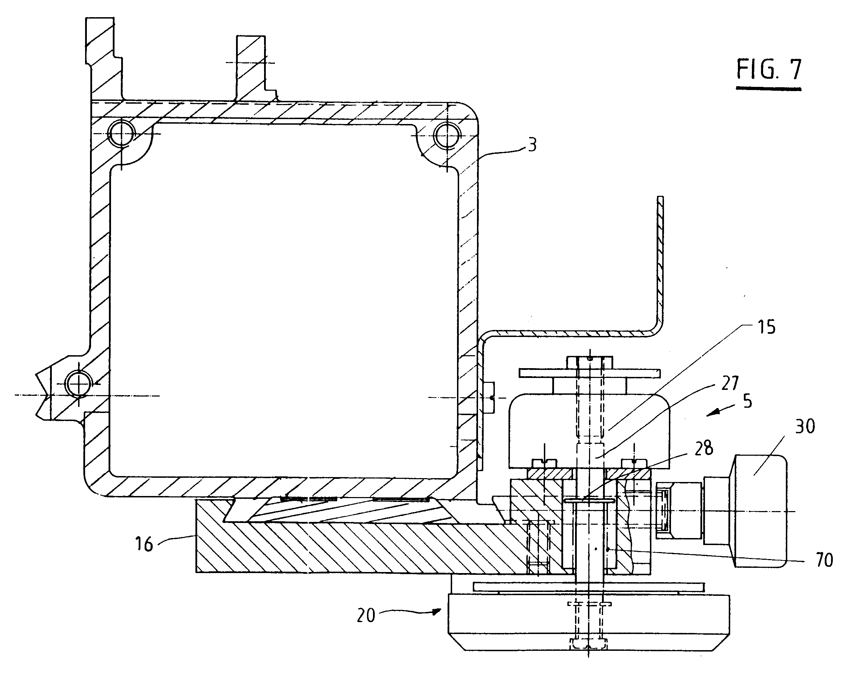

In der Mitte des Joches 31 ist eine durchgehende Bohrung 38 angebracht, durch welche der Bolzen 39 einer Stellschraube 30 lose hindurchgeführt ist. Im Hochteil 18 der Platte 16 ist eine Gewindebohrung 41 eingelassen, in welcher der Gewindebolzen 39 eingeschraubt ist. Wenn die Stellschraube 30 angezogen wird, werden die schrägen Stirnflächen 35 der Stössel 28 gegen die Schmalseite 64 der Schiene 4 angedrückt und diese in der Ausnehmung 7 festgeklemmt. Dadurch wird die Mitnahmevorrichtung 5 auf dem Balken 3 fixiert. In den Fig. 1 und 7 ist die Einrichtung vor dem Anziehen der Druckschraube 30, wie sie beim Anbringen am Balken 3 vorliegt, dargestellt.

Die Mitnahmevorrichtung 5 weist neben der Grundplatte 16 einen Greifer 20 auf, welcher zur unmittelbaren und steuerbaren Einwirkung der Mitnahmevorrichtung 5 auf die Materialbahn 1 bestimmt und ausgeführt ist. Die dem Bett 2 zugewandte Seite weist zu diesem Zweck zumindest eine Reihe von ausfahrbaren Nadeln 6 auf.

Der Greifer 20 (Fig. 1 und 4 bis 7) enthält einen Mantel 21, der eine Nadel-Trägerplatte 22 umschliesst und axial führt. Der Mantel 21 hat die Form einer Hülse, die aus einem harten Material, beispielsweise aus Metall gefertigt ist. Die von der Grundplatte 16 abgewandte Stirnfläche des Mantels 21 weist eine ringförmige, umlaufende Nut bzw. Rille 42 auf, in welcher ein Ring 24 aus einem nachgiebigen Material eingelegt ist. Dieser Ring 24 kann aus Gummi oder einem geeigneten Kunststoff bestehen. Die Tiefe der Rille 42 ist etwas kleiner als die Dicke des Ringes 24, damit der Ring 24 aus der unteren Oberfläche der Hülse 21 hervorsteht. Wenn der Greifer 20 auf das Bahnmaterial 1 abgesenkt wird, kommt folglich zunächst der hervortretende Abschnitt zum Aufliegen.

Die Trägerplatte 22 ist so bemessen, dass der wesentliche Teil derselben wie ein Kolben im Inneren des Mantels 21 in vertikaler Richtung hin und her zu bewegen ist. Am oberen, bzw. dem Grundkörper 16 der Mitnahmevorrichtung 5 zugewandten Rand der Trägerplatte 22 schliesst sich ein nach aussen gerichteter bzw. ragender Flansch 44 an und überdeckt teilweise die Stirnfläche 65 des Mantels 21. In der Stirnfläche 65 sind Gewindebohrungen 45 (Fig. 4 und 6) sowie Sacklöcher 46 (Fig. 4 und 5) eingelassen. Im dargestellten Beispiel sind es vier Gewindebohrungen 45 und sechs Sacklöcher 46.

Im Flansch 44 sind Öffnungen entsprechend den Gewindebohrungen 35 angebracht. Durch diese Öffnungen sind Schrauben 47 hindurchgeführt, deren Gewindeabschnitte in den Gewindelöchern 45 eingeschraubt sind. Die Tiefe der Gewindebohrungen 45 ist hinsichtlich der Länge der Schrauben 47 so gewählt, dass Spiel zwischen dem Kopf und der Schraube 47 und der Stirnfläche 65 des Mantels 21 vorliegt. Dieses Spiel ermöglicht eine hin- und hergehende Bewegung in bezug auf die Hülse 21. In den Sacklöchern 46 befinden sich Druckfedern 48, die sich auf dem Boden des Sackloches 46 und auf der Unterseite des Flansches 44 abstützen. Die Trägerplatte 22 befindet sich in bezug auf den Mantel 21 in ihrer oberen Läge, wenn die Druckfedern 48 unbelastet sind.

In der Trägerplatte 22 sind in Öffhungen 23 Nadeln 6 eingesetzt sind. Im in Fig. 4 dargestellten Fall bilden die Nadelöffhungen 23 fünf Reihen, deren Richtung zur Längsrichtung P des Bettes parallel ist. Die Spitzenpartien 49 der Nadeln 6 treten aus der unteren Oberfläche 50 der Trägerplatte 22 hervor. Die Länge der hervortretenden Spitzenpartie 49 soll nicht grösser sein, als die Dicke des behandelten Bahnmaterials 1. Die Spitzenpartie 49 ist demnach recht kurz, weil als Bahnmaterial 1 vor allem Folien, Papier oder ähnliche Materialien in Frage kommen.

Wenn die Nadelspitzen 49 in das zu befördernde Material 1 eingedrückt werden, dann bildet sich ein Krater aus dem die Nadelspitze 49 umgebenden Material der Bahn 1. Damit solche Materialanhäufungen die Trägerplatte 22 nicht anheben können, was den Eingriff zwischen den Nadelspitzen 49 und der Materialbahn 1 beeinträchtigen würde, sind Vertiefungen 66 in der Unterseite 50 der Trägerplatte 22 angebracht, in welchen das allfällig hochgedrückte Material ausreichend Platz findet. Die Achse A der Nadeln 6 steht zur Bewegungsrichtung P der Warenbahn 1 unter einem Winkel alpha, welcher gleich oder kleiner ist als 90 Grad. Der Winkel alpha liegt vorzugsweise zwischen 70 und 90 Grad.

Im unbelasteten Zustand befindet sich die Trägerplatte 22 in ihrer oberen Stellung, und die Nadelspitzenpartien 49 liegen im Inneren des Mantels 21. Um einen zum Vorschub der Materialbahn 1 erforderlichen Eingriff zwischen der Mitnahmevorrichtung 5 und der Materialbahn 1 bewirken zu können, wird die Trägerplatte 22 abgesenkt, bis die Nadelspitzen 49 in das Material eindringen. Die Absenkung der Trägerplatte 22 erfolgt durch ein Antriebsmittel 15. Dieses kann ein an sich bekannter Elektromagnet sein, welcher über die bereits erwähnte Leiter 13 und 14 erregbar ist. Der Elektromagnet 15 ist auf dem erhöhten Abschnitt 18 der Grundplatte 16 montiert. Unter dem Elektromagneten 15 liegt ein Vertikalkanal 52 im erhöhten Körperabschnitt 18. Im oberen Teil dieses Kanals 52 liegt eine mit dem Antriebsmittel 15 wirkverbundene Schubstange 51. Diese wird bei Betätigung des Antriebes 15 abwärts bewegt.

In einem Abschnitt des Vertikalkanales 52, welcher sich unten an den bereits genannten oberen Abschnitt anschliesst, befindet sich eine weitere Stange 27, deren unteres Ende in einer Öffnung in der Trägerplatte 22 eingeschraubt ist. Auf das obere Ende dieser Trägerstange 27 drückt das untere Ende der Schubstange 51 (Fig. 1 und 6), wenn Steuersignale den Elektromagneten 15 erregen. Dabei wird die Trägerplatte 22 samt den Nadeln 6 bis zur Materialbahn abgesenkt. Anstelle von Nadeln 6 können an der Unterseite der Trägerplatte 22 auch Gummizäpfchen oder scharfkantige Körner angebracht sein, die eine kraftschlüssige Verbindung zur Materialbahn 1 herstellen.

Um die Vorrichtung 5 ausser Eingriff mit der Bahn 1 halten zu können, ist der Grundplatte 16 eine Tragfeder 53 zugeordnet. Diese ist als federnde und praktisch horizontal liegende bzw. praktisch senkrecht zur Längsachse der Trägerstange 27 verlaufende Stange ausgeführt. Das obere Ende der Trägerstange 27 ist mit einer Bohrung versehen, in der das eine Ende der Tragfeder 53 eingreift (Fig. 6).

Das andere Ende der Tragfeder 53 (Fig. 2) liegt im Bereich des Flachabschnittes 17 der Grundplatte 16 und es ist zwischen einer Klemmplatte 54 und der Oberseite des Flachabschnittes 16 des Grundkörpers 16 geklemmt.

Im unbetätigten Zustand befindet sich die Schubstange 52 am Antriebsmittel 15 in ihrer oberen Läge. Dasselbe trifft für den Greifer 20 als Ganzes zu, weil dieser durch die auf die Tragstange 27 wirkende Kraft der Tragfeder 53 ebenfalls in seiner oberen Lage gehalten ist. Diese Situation ist in der rechten Hälfte von Fig. 5 dargestellt. Vom Flansch 44 an der Trägerplatte 22 hängt der Mantel 21 des Greifers 20 herab, so dass die angehobenen Nadelspitzen 49 durch den unteren Rand 67 des Mantels 21 gegen eine allfällige mechanische Beschädigung geschützt sind. In einer weiteren vorteilhaften Ausgestaltung der Erfindung tritt anstelle der Tragfeder 53 eine die Trägerstange 27 umschlingende, in der Grundplatte 16 abgestützte Schraubenfeder 70. Ein an der Trägerstange 27 angebrachter Flansch 28 dient als zweite Auflagefläche für die Feder 70. Bei dieser Ausführungsform entfällt die Schubstange 52, da sie eine Einheit mit der Trägerstange 27 bildet.

Bei Betätigung des Antriebsmittels 15 drückt die Schubstange 52 bzw. die Trägerstange 27 gegen die Wirkung der Tragfeder 53 bzw. der Schraubenfeder 70 abwärts. Zusammen mit der Trägerstange 27 bewegt sich auch der gesamte Greifer 20 abwärts. Zunächst kommt die aus der Rille 42 hervorstehende Partie des elastischen Ringes 24 auf dem Bahnmaterial 1 zum Aufliegen. Der Ring 24 dämpft das Aufsetzen des Greifers 20 auf dem Bahnmaterial 1. Die Trägerstange 27 bewegt sich jedoch weiter abwärts, was zunächst zur Folge hat, dass die Schraubenfedern 48 unter dem Flansch 44 zusammengedrückt werden. Während des weiteren Absenkens der Trägerplatte 22 dringen die Spitzenpartien 49 der Nadeln 6 in das Material der Bahn 1 ein. Der Endzustand ist in der linken Hälfte von Fig. 5 dargestellt. Nun kann der Vorschub der Bahn 1 mit Hilfe des Balkens 3 durchgeführt werden.

Wenn der Eingriff zwischen dem Greifer 20 und der Bahn 1 aufgehoben werden soll, wird der Magnet 15 im Antriebsmittel entregt, was zur Folge hat, dass die Schubstange 52 bzw. die Trägerstange 27 in ihre obere Läge zurückkehrt. Unter der Einwirkung der Federstange 53 bzw. der Schraubenfeder 70 beginnt sich auch der Greifer 20 aufwärts zu bewegen. Die Nadelspitzen 49 können im Material der Bahn 1 verhältnismässig tief und fest eingedrückt sein, so dass die dünne Bahn 1 sich zusammen mit den Nadeln 6 aufwärts bewegen würde. Dies ist unerwünscht. Um das Abheben der Materialbahn 1 vom Bett 2 zu verhindern, drückt der Mantel 21 über den Ring 24 auf die Bahn 1, weil der Mantel 21 durch die Federn 48 während der ersten Phase der Aufwärtsbewegung der Trägerplatte 22 weiterhin gegen abwärts gedrückt wird. Der Weg der Schraubenfeder 48 ist so bemessen, dass ihre Druckwirkung erst dann aufhört, nachdem die Nadelspitzen 49 die Materialbahn 1 verlassen haben. Ab diesem Moment beginnt sich der Mantel 21 ebenfalls aufwärts zu bewegen, und er hängt dann wieder an der Trägerplatte 22. Der Greifer 20 ist zu einem weiteren Arbeitsgang bereit.

Um zu verhindern, dass die Kraft, welche beim Vorschub der Materialbahn 1 aufgewendet werden muss und welche sich als eine Scherkraft zwischen dem Grundkörper 16 der Mitnehmevorrichtung 5 und dem Greifer 20 auswirkt, auf die Schubstange bzw. die Trägerstange 27 übertragen werden kann, sind Führungsstifte 25 und 26 (Fig. 4 und 6) vorgesehen. Die oberen Enden dieser Führungsstifte 25 und 26 sind im erhöhten Abschnitt 18 des Grundkörpers 16 befestigt, beispielsweise eingeschraubt. Die unteren Endpartien dieser Führungsstifte 25 und 26 greifen spielfrei in entsprechende Bohrungen, welche in der Trägerplatte 22 eingelassen sind, ein.

## Patentansprüche

1. Einrichtung in einem Flachbettplotter zum Vorschieben und zum Halten von bahnförmigem Material (1), z.B. Folien, Papier etc. auf dem Bett (2) des Flachbettplotters, mit einem über dem Bett (2) in Transportrichtung für das bahnförmige Material (1) fahrbaren Balken (3), an dem eine Mitnahmevorrichtung (5) befestigt ist, mit mindestens einer vertikal auf das bahnförmige Material (1) absenkbaren, von einem hülsenförmigen Mantel (21) umgebenen Trägerplatte (22), an der eine kraftschlüssige Verbindung mit der Materialbahn (1) herstellende Haltemittel befestigt sind, dadurch gekennzeichnet, dass an der nach unten gerichteten Stirnfläche des Mantels (21) ein elastischer Ring (24) eingelegt ist, dessen unten liegender Scheitel in der Ausgangsstellung die durch die freien Enden der Haltemittel gebildete Ebene nach unten überragt.

2. Einrichtung nach Anspruch 1, dadurch gekennzeichnet, dass der Mantel (21) mit dem elastischen Ring (24) bezüglich der Platte (22) gegen die Kraft einer Feder (48) axial nach oben verschiebbar gelagert ist.

3. Einrichtung nach einem der Ansprüche 1 oder 2, dadurch gekennzeichnet, dass die Haltemittel in einer oder mehreren Vertiefungen (66) in der Unterseite (50) der Platte (22) angeordnet sind und/oder dass die Unterseite (50) eine rauhe Oberflächenstruktur aufweist.

4. Einrichtung nach Anspruch 3, dadurch gekennzeichnet, dass die Unterseite der Platte (22) Reihen von Nadeln (6) aufweist, und dass die Nadeln (6) rechtwinklig oder in einer geneigten Lage gegenüber der Oberfläche des Bettes im Greifer (20) angeordnet sind, oder dass an der Platte (22) Haltemittel in Gestalt von Gummizäpfchen oder scharfkantigen Körnern aufgebracht sind.

5. Einrichtung nach Anspruch 4, dadurch gekennzeichnet, dass alle Nadeln (6) in die gleiche Richtung geneigt sind.

6. Einrichtung nach Anspruch 1, dadurch gekennzeichnet, dass die Vorrichtung (5) an der Unterseite des Balkens (3) angeordnet ist und deren dem Balken (3) zugekehrte Wand eine in der Längsrichtung des Balkens (3) verlaufende Ausnehmung (7) aufweist, und dass die Vorrichtung (5) entlang dem Balken (3) verschiebbar und feststellbar ist.

7. Einrichtung nach Anspruch 3, dadurch gekennzeichnet, dass die Ausnehmung (7) schwalbenschwanzförmig ist, wobei die eine Begrenzung der Ausnehmung (7) durch verstellbare Backen (10) mit schrägen Stirnflächen (35) gebildet wird.

8. Einrichtung nach Anspruch 2, dadurch gekennzeichnet, dass an der Grundplatte (16) ein Antriebsmittel (15) zum Senken und Heben der Trägerplatte (22), beispielsweise ein Elektromagnet, vorgesehen ist.

9. Einrichtung nach einem der Ansprüche 1-8, dadurch gekennzeichnet, dass die Trägerplatte (22) mit Führungsstiften (25,26) an der Unterseite der Grundplatte (16) vertikal geführt ist.

10. Einrichtung nach einem der Ansprüche 2 bis 9, dadurch gekennzeichnet, dass beim Aufsetzen der Mitnahmevorrichtung (5) auf die Materialbahn (2) vorerst der elastische Ring (24) und anschliessend die Haltemittel in Kontakt mit der Oberfläche der Materialbahn (2) gelangen.

11. Einrichtung nach Anspruch 10, dadurch gekennzeichnet, dass der Ring (24) nach dem Eindrücken der Haltemittel in die Materialbahn (2) gegen die Kraft von Federn (48) zwischen dem Mantel (21) und der Trägerplatte (22) an die Materialbahn (2) anpressbar ist.

12. Einrichtung nach Anspruch 11, dadurch gekennzeichnet, dass die Trägerplatte (22) und der Mantel (21) bei Wegfall der nach unten wirkenden Kraft des Antriebsmittels (15) durch eine Feder (53 oder 70) von der Materialbahn abhebbar sind, und dass der Mantel (21) beim Abheben der Trägerplatte (22) durch die Federn (48) vorerst an die Materialbahn (2) angepresst verharrt.

## Claims

1. A device in a flatbed plotter for advancing and holding web-like material (1), e.g. foils, paper, etc., on the bed (2) of the flatbed plotter, with a beam (3) movable over the bed (2) in the conveying direction for the web-like material (1), to which beam is attached an entrainment apparatus (5) with at least one carrier plate (22) which is vertically lowerable on the web-like material (1) and is encompassed by a sleeve-like case (21), to which plate are attached fixing means producing a frictional connection with the material web (1), characterized in that an elastic ring (24) is embedded in the downwardly facing surface of the case (21) whose lower apex projects downwardly beyond the plane formed by the free ends of the fixing means.

2. A device as claimed in claim 1, characterized in that the case (21) with the elastic ring (24) is held axially upwardly displaceable with respect to the plate (22) against the force of a spring (48).

3. A device as claimed in one of the claims 1 or 2, characterized in that the fixing means are arranged in one or several recesses (66) in the lower side (50) of the plate (22) and/or that the lower side (50) is provided with a rough surface structure.

4. A device as claimed in claim 3, characterized in that the lower side of the plate (22) is provided with rows of needles (6) and the needles (6) are arranged in the gripping means at a right angle or in an inclined position with respect to the surface of the bed or that fixing means in the form of rubber pins or sharp-edged grains are attached to the plate (22).

5. A device as claimed in claim 4, characterized in that all needles (6) are inclined in the same direction.

6. A device as claimed in claim 1, characterized in that the apparatus (5) is arranged on the lower side of the beam (3) and the wall of the apparatus facing the beam (3) is provided with a recess (7) extending in the longitudinal direction of the beam (3) and that the apparatus (5) is displaceable along the beam (3) and fixable.

7. A device as claimed in claim 3, characterized in that the recess (7) is swallow-tail-like, with the limitation of the recess (7) being formed by adjustable cheeks (10) with inclined face surfaces (35).

8. A device as claimed in claim 2, characterized in that a drive means (15) such as an electromagnet is provided on the base plate (16) for lowering or lifting the carrier plate (22).

9. A device as claimed in one of the claims 1 to 8, characterized in that the carrier plate (22) is vertically guided with guide pins (25, 26) on the lower side of the base plate (16).

10. A device as claimed in one of the claims 2 to 9, characterized in that during the touchdown of the entrainment apparatus (5) on the material web (2) at first the elastic ring (24) and thereafter the fixing means come into contact with the surface of the material web (2).

11. A device as claimed in claim 10, characterized in that after the pressing of the fixing means into the material web (2) the ring (24) can be pressed between the case (21) and the carrier plate (22) on the material web (2) against the force of springs (48).

12. A device as claimed in claim 11, characterized in that the carrier plate (22) and the case (21), after the disappearance of the downwardly acting force of the drive means (15), can be lifted from the material web by a spring (53 or 70) and that the case (21) remains temporarily pressed against the material web (2) during the lifting of the carrier plate (22) by the springs (48).

## Revendications

1. Dispositif dans un ordinatographe sur table pour faire avancer et maintenir un matériau sous forme de feuille continue (1), par exemple un film, du papier, etc. sur le banc (2) de l'ordinatographe, ce dispositif étant pourvu d'une barre (3) déplaçable au-dessus du banc dans le sens du transport pour le matériau (1) sous forme de feuille continue et sur laquelle on a fixé un dispositif d'entraînement (5), présentant au moins une plaque de support (22) pouvant descendre verticalement sur le matériau en forme de feuille continue (1) et entourée d'une enveloppe (21) en forme de gaine et sur laquelle sont fixés des moyens de maintien créant une liaison d'entraînement par adhérence avec la feuille continue de matériau (1) **caractérisé en ce qu'**on a inséré un anneau élastique (24) sur la face dirigée vers le bas de l'enveloppe (21), dont le sommet placé en bas en position normale dépasse vers le bas le plan formé par les extrémités libres des moyens de maintien.

2. Dispositif selon la revendication 1 **caractérisé en ce qu'**on a placé l'enveloppe (21) pourvue de l'anneau élastique (24) de manière à la décaler axialement vers le haut par rapport à la plaque (22) et contre la force exercée par un ressort (48).

3. Dispositif selon l'une des revendications 1 ou 2 **caractérisé en ce que** les moyens de maintien sont placés dans une ou plusieurs cavités (66) de la surface inférieure (50) de la plaque (22) et/ou en ce que la surface inférieure (50) présente une structure de surface rêche.

4. Dispositif selon la revendication 3 **caractérisé en ce que** la surface inférieure de la plaque (22) présente des rangées d'aiguilles (6) et que ces aiguilles (6) sont placées dans la griffe (20), à angle droit ou dans une position inclinée par rapport à la surface supérieure du banc ou en ce qu'on a placé sur la plaque (22) des moyens de maintien sous forme de petits tenons en caoutchouc ou de grains à arêtes vives.

5. Dispositif selon la revendication 4 **caractérisé en ce que** toutes les aiguilles (6) sont inclinées dans le même sens.

6. Dispositif selon la revendication 1 **caractérisé en ce que** le dispositif (5) est placé sur la face inférieure de la barre (3) et que sa paroi tournée vers la barre (3) présente un creux (7) s'étendant dans le sens longitudinal de la barre (3) et en ce qu'on peut décaler et bloquer le dispositif (5) le long de la barre (3).

7. Dispositif selon la revendication 3 **caractérisé en ce que** le creux (7) est en queue d'aronde, des mâchoires réglables (10) pourvues de faces obliques (35) formant une limitation du creux (7).

8. Dispositif selon la revendication 2 **caractérisé en ce qu'**on a prévu un moyen d'entraînement (15), par exemple un électro-aimant, sur la plaque de base (16) de manière à descendre et lever la plaque de support (22).

9. Dispositif selon l'une des revendications 1 à 8 **caractérisé en ce que** la plaque de support (22) est guidée verticalement sur la face inférieure de la plaque de base (16) avec des goupilles de guidage (25, 26).

10. Dispositif selon l'une des revendications 2 à 9 **caractérisé en ce que** d'abord l'anneau élastique (24), puis les moyens de maintien entrent en contact avec la surface de la feuille continue de matériau (2) lorsque le dispositif d'entraînement (5) se pose sur cette feuille (2).

11. Dispositif selon la revendication 10 **caractérisé en ce que** l'anneau (24) peut être serré entre l'enveloppe (21) et la plaque de support (22) contre la force des ressorts (48) après que les moyens de maintien ont été pressés dans la feuille continue de matériau (2).

12. Dispositif selon la revendication 11 **caractérisé en ce que** la plaque de support (22) et l'enveloppe (21) peuvent être retirées de la feuille continue de matériau (2) par levage au moyen d'un ressort (53 ou 70) lors de la suppression de la force du moyen d'entraînement (15) s'exerçant vers le bas et en ce que l'enveloppe (21) reste tout d'abord pressée sur la feuille continue de matériau (2) au moyen des ressorts (48) lors du retrait par levage de la plaque de support (22).
